# EUROPÄISCHE PATENTSCHRIFT

(11) **EP 3 710 753 B1**
(45) Veröffentlichungstag und Bekanntmachung des Hinweises auf die Patenterteilung: **10.05.2023**
(21) Anmeldenummer: 18807716.8
(22) Anmeldetag: 09.11.2018
(51) Int. Cl.: F24C 7/08, F25D 29/00, D06F 39/00, A47L 15/00, A47J 37/00, D06F 105/58, H05B 6/12

(54) **HAUSHALTSGERÄTESYSTEM**
HOUSEHOLD APPLIANCE SYSTEM
SYSTÈME D'APPAREIL MÉNAGER

(30) Priorität: 15.11.2017 ES 201731325
(43) Veröffentlichungstag der Anmeldung: 23.09.2020
(73) Patentinhaber: BSH Hausgeräte GmbH, 81739 München (DE)
(72) Erfinder: FRANCO GUTIERREZ, Carlos, 50017 Zaragoza (ES); MARZO ALVAREZ, Teresa Del Carmen, 50006 Zaragoza (ES); PAESA GARCIA, David, 50015 Zaragoza (ES); PARRA BORDERÍAS, Maria, 50006 Zaragoza (ES); RODRIGUEZ LARROSA, Agostina, 50011 Zaragoza (ES); VILLANUEVA VALERO, Beatriz, 50011 Zaragoza (ES)
(86) Internationale Anmeldenummer: PCT/IB2018/058822
(87) Internationale Veröffentlichungsnummer: WO 2019/097376

(56) Entgegenhaltungen:
- EP-A1- 0 971 173
- EP-A1- 3 040 465
- WO-A1-2015/004941
- WO-A2-2007/038181
- DE-A1- 10 103 948
- DE-A1- 10 117 292
- DE-A1-102008 026 481
- DE-A1-102013 226 362
- DE-A1-102015 113 260
- DE-A1-102015 210 879
- US-A1- 2006 150 120
- US-A1- 2007 271 512
- US-A1- 2013 036 170
- US-A1- 2015 053 302
- US-B1- 9 791 936

## Beschreibung

Die Erfindung betrifft ein Haushaltsgerätesystem nach dem Anspruch 1 und ein Verfahren zu einem Betrieb eines Haushaltsgerätesystems nach dem Anspruch 12.

Aus dem Stand der Technik ist bereits ein Haushaltsgerätesystem mit einer Ausgabeeinheit und mit einer Funktionseinheit bekannt, welche in einem Betriebszustand eine Haushaltsgerätehauptfunktion ausführt. Die Funktionseinheit ist Teil eines als Kochfeld ausgebildeten Haushaltsgeräts. Eine Steuereinheit, welche ebenfalls Teil des Kochfelds ist, verändert in Abhängigkeit einer Bedieneingabe mittels einer Bedienerschnittstelle Grundeinstellungen, wie beispielsweise eine Art einer Ausgabe über die Ausgabeeinheit. Die veränderten Grundeinstellungen gelten für alle Nutzer. Sollte ein Nutzer andere Wünsche als ein weiterer Nutzer haben, müssen jedes Mal die Grundeinstellungen geändert werden. Dies kann, insbesondere bei einem Kochfeld, an welchem abwechselnd mehrere Nutzer tätig sind, zeitaufwändig sein.

Ferner ist aus der Druckschrift EP 3 040 465A1 ein Verfahren zum Betrieb von Wärmebehandlungsmaschinen bekannt, wobei eine Auswahl einer Programmsprache mittels einer externen Wahlstation erfolgt. Auch die Druckschrift DE 101 17 292 A1 offenbart, dass eine Landessprache für ein Haushaltsgerät auswählbar ist.

Zudem beschreibt die Druckschrift US 2007/0271512 A1 die automatische Erkennung eines Nutzers anhand biometrischer Informationen und die darauffolgende Darstellung eines nutzerspezifischen Interfaces.

Außerdem ist aus der Druckschrift DE 101 03 948 A1 bereits bekannt, dass einem biometrisch erkannten Benutzer eine Benutzer- oder Berechtigungsebene zuordenbar ist, wobei in der Benutzer- oder Berechtigungsebene dem Benutzer zugehörige Informationen gespeichert sind.

Darüber hinaus ist aus der DE 10 2008 026 481 A1 ein Haushaltsgerätesystem mit einem Gargerät bekannt, an dem sich ein Benutzer mittels eines speziellen Identifizierungsobjekts, beispielsweise eines USB-Sticks, anmeldet, und zwar identifiziert. Nach erfolgreicher Identifizierung des Benutzers sind individuell auf den Benutzer abgestimmte Einstellungen des Gargeräts ladbar und/oder aufrufbar.

Die Aufgabe der Erfindung besteht insbesondere darin, ein gattungsgemäßes System mit verbesserten Eigenschaften hinsichtlich eines Bedienkomforts bereitzustellen. Die Aufgabe wird erfindungsgemäß durch die Merkmale der Ansprüche 1 und 12 gelöst, während vorteilhafte Ausgestaltungen und Weiterbildungen der Erfindung den Unteransprüchen entnommen werden können.

Es wird ein Haushaltsgerätesystem mit zumindest einer Ausgabeeinheit, mit zumindest einer Funktionseinheit, welche in wenigstens einem Betriebszustand zumindest eine Haushaltsgerätehauptfunktion ausführt, und mit zumindest einer Steuereinheit vorgeschlagen, die dazu vorgesehen ist, über die Ausgabeeinheit zumindest einen Katalog an Bedienungsprofilen für die Funktionseinheit zu einer Auswahl vorzuschlagen. Durch die erfindungsgemäße Ausgestaltung kann insbesondere ein hoher Bedienkomfort erreicht werden. Insbesondere kann auf spezielle Bedürfnisse eines Nutzers eingegangen werden, wodurch insbesondere eine hohe Nutzerfreundlichkeit und/oder ein einfaches und/oder interaktives Zusammenwirken mit der Funktionseinheit ermöglicht werden kann. Durch den Katalog an Bedienungsprofilen kann insbesondere eine hohe Flexibilität erreicht werden, wodurch insbesondere eine hohe Nutzerzufriedenheit erzielt werden kann.

Unter einem "Haushaltsgerätesystem" soll ein System verstanden werden, welches zumindest eine Funktionseinheit aufweist, deren Hauptfunktion eine Ausführung einer Haushaltsgerätehauptfunktion ist, und welches insbesondere zusätzlich zumindest eine weitere Funktionseinheit aufweisen könnte, deren Hauptfunktion von einer Ausführung einer Haushaltsgerätehauptfunktion abweichen könnte. Die Haushaltsgerätehauptfunktion ist eine Garfunktion, möglicherweise zusätzlich eine Bearbeitungsfunktion, insbesondere zu einer Bearbeitung von Lebensmitteln, und/oder eine Lagerungsfunktion, insbesondere eine Kühlungsfunktion und/oder eine Gefrierfunktion, von Lebensmitteln. Zusätzlich könnte die Haushaltsgerätehauptfunktion eine Reinigungsfunktion und/oder eine Trocknungsfunktion sein. Die Hauptfunktion der weiteren Funktionseinheit, welche insbesondere von einer Ausführung einer Haushaltsgerätehauptfunktion abweichen könnte, könnte beispielsweise ein Telefonieren und/oder eine Bearbeitung von Daten und/oder eine Verwaltung von Daten und/oder ein Erstellen von Schriftsätzen und/oder ein Schreiben von Textnachrichten und/oder ein Surfen im Internet sein. Insbesondere könnte das Haushaltsgerätesystem zumindest ein Haushaltsgerät und/oder zumindest ein weiteres Haushaltsgerät und/oder zumindest ein Mobilgerät und/oder zumindest einen Computer aufweisen. Das Mobilgerät könnte insbesondere ein Handy und/oder ein Tablet sein.

Unter einer "Ausgabeeinheit" soll insbesondere eine Einheit verstanden werden, welche dazu vorgesehen ist, einem Nutzer insbesondere optisch und/oder akustisch und/oder haptisch zumindest eine Kenngröße bereitzustellen, wie beispielsweise eine Information und/oder eine Zeitangabe und/oder eine Bedienaufforderung und/oder eine Handlungsaufforderung und/oder eine Auswahl. Die Ausgabeeinheit könnte insbesondere dazu vorgesehen sein, wenigstens ein akustisches Signal und/oder insbesondere wenigstens eine akustische Sequenz auszugeben, wie beispielsweise einen Klingelton und/oder ein Warnsignal und/oder eine Aufforderung in Form eines insbesondere vorgefertigten Satzes. Alternativ oder zusätzlich könnte die Ausgabeeinheit dazu vorgesehen sein, eine optische Ausgabe bereitzustellen, wie beispielsweise eine Anzeige wenigstens eines Bilds und/oder wenigstens eines Texts und/oder wenigstens einer Ziffer und/oder wenigstens einer Animation. Beispielsweise könnte die Ausgabeeinheit zumindest einen Lautsprecher aufweisen. Alternativ oder zusätzlich könnte die Ausgabeeinheit eine Anzeigeeinheit, insbesondere mit zumindest einem Leuchtmittel, vorteilhaft einer LED, und/oder einem insbesondere hinterleuchteten Display, insbesondere einem Matrixdisplay und/oder einem LCD-Display, einem OLED-Display und/oder elektronischen Papier, aufweisen. Vorteilhaft weist die Ausgabeeinheit zumindest eine Flüssigkristallanzeige auf.

Unter einer "Funktionseinheit" soll insbesondere eine Einheit verstanden werden, welche Teil eines Haushaltsgeräts ist und welche in wenigstens einem Betriebszustand die Haushaltsgerätehauptfunktion des Haushaltsgeräts ausführt. Die Funktionseinheit könnte beispielsweise in wenigstens einem Betriebszustand zumindest eine Kühlungsfunktion und/oder zumindest eine Gefrierfunktion und/oder zumindest eine Heizfunktion und/oder zumindest eine Garfunktion und/oder zumindest eine Bearbeitungsfunktion und/oder zumindest eine Skalierungsfunktion und/oder zumindest eine Reinigungsfunktion und/oder zumindest eine Trocknungsfunktion ausführen. Die Funktionseinheit könnte beispielsweise zumindest eine Kälteeinheit, welche beispielsweise zumindest einen Kühlkreislauf aufweisen könnte, und/oder zumindest eine Heizeinheit und/oder zumindest eine Trocknungseinheit und/oder zumindest eine Schleuder und/oder zumindest eine Reinigungseinheit und/oder zumindest eine Bearbeitungseinheit und/oder zumindest eine Skalierungseinheit sein.

Unter einer "Steuereinheit" soll insbesondere eine elektronische Einheit verstanden werden, die vorzugsweise dazu vorgesehen ist, zumindest die Ausgabeeinheit zu steuern und/oder zu regeln. Die Steuereinheit könnte beispielsweise in einer Steuer- und/oder Regeleinheit zumindest eines Haushaltsgeräts, insbesondere eines Kochfelds, wenigstens teilweise integriert und insbesondere dazu vorgesehen sein, zumindest eine Funktionseinheit des Haushaltsgeräts, welche insbesondere zu einer Ausführung einer Hauptfunktion des Haushaltsgeräts vorgesehen sein könnte, zu steuern und/oder zu regeln. Insbesondere weist die Steuereinheit eine Recheneinheit und insbesondere zusätzlich zu der Recheneinheit eine Speichereinheit mit einem darin gespeicherten Steuer- und/oder Regelprogramm auf, das dazu vorgesehen ist, von der Recheneinheit ausgeführt zu werden. Beispielsweise könnten in der Speichereinheit insbesondere zumindest zwei, vorteilhaft zumindest drei, besonders vorteilhaft zumindest fünf, vorzugsweise zumindest acht und besonders bevorzugt mehrere verschiedene Bedienungsprofile gespeichert sein. Die Steuereinheit ist insbesondere zu einer Kommunikation und/oder Interaktion mit dem Bediener vorgesehen, insbesondere über die Ausgabeeinheit und/oder über eine Bedienerschnittstelle. Die Steuereinheit ist insbesondere dazu vorgesehen, in wenigstens einem Betriebszustand die Ausgabeeinheit anzusteuern und insbesondere mittels der Ausgabeeinheit den Katalog an Bedienungsprofilen für die Funktionseinheit an einen Nutzer zu einer Auswahl auszugeben. Insbesondere weist das Haushaltsgerätesystem zumindest eine Bedienerschnittstelle auf, welche insbesondere wenigstens teilweise Teil eines Haushaltsgeräts sein könnte.

Unter einem "Haushaltsgerät" soll insbesondere ein elektrisches und/oder elektronisches Gerät verstanden werden, welches zu einer Garung von Lebensmitteln und/oder Zubereitung von Lebensmitteln und/oder Lagerung, insbesondere Kühlung und/oder Gefrierung, von Lebensmitteln und/oder zu einer Reinigung, insbesondere von Geschirr und/oder von Wäsche, wie beispielsweise von Kleidungsstücken, und/oder zu einer Trocknung von Wäsche vorgesehen ist. Insbesondere ist das Haushaltsgerät für einen Privathaushalt vorgesehen. Das Haushaltsgerät ist insbesondere einer Bezeichnung ,weiße Ware' zugeordnet. Beispielsweise könnte es sich bei dem Haushaltsgerät um ein Kältegerät, wie beispielsweise eine Kühltruhe und vorteilhaft um einen Kühl- und/oder Gefrierschrank, handeln. Bei dem Haushaltsgerät könnte es sich alternativ oder zusätzlich um ein Reinigungsgerät handeln, wobei das Haushaltsgerät insbesondere eine Spülmaschine und/oder eine Waschmaschine und/oder ein Trockner sein könnte. Alternativ oder zusätzlich könnte es sich bei dem Haushaltsgerät um ein Skalierungsgerät handeln. Das Skalierungsgerät könnte insbesondere eine Waage, insbesondere eine Küchenwaage, sein. Bei dem Haushaltsgerät könnte es sich alternativ oder zusätzlich um ein Bearbeitungsgerät handeln. Das Bearbeitungsgerät könnte insbesondere eine Knetmaschine und/oder eine Teigmaschine und/oder ein Mixer und/oder eine Rührmaschine sein. Vorteilhaft handelt es sich bei dem Haushaltsgerät um ein Gargerät. Ein als Gargerät ausgebildetes Haushaltsgerät könnte beispielsweise ein Backofen und/oder eine Mikrowelle und/oder ein Grillgerät und/oder ein Dampfgargerät sein. Vorteilhaft ist das als Gargerät ausgebildete Haushaltsgerät ein Kochfeld und vorzugsweise ein Induktionskochfeld.

Unter einem "Bedienungsprofil" soll insbesondere ein Satz von mindestens zwei, insbesondere von mindestens drei, vorteilhaft mindestens vier, besonders vorteilhaft mindestens fünf, vorzugsweise mindestens sieben und besonders bevorzugt mindestens zehn Einstellungen, insbesondere Grundeinstellungen, verstanden werden. Insbesondere unterscheiden sich zwei Bedienungsprofile des Katalogs insbesondere durch mindestens eine Einstellung, insbesondere durch mindestens eine Grundeinstellung. Insbesondere weist wenigstens ein Großteil der Bedienungsprofile und vorteilhaft jedes der Bedienungsprofile einen für das entsprechende Bedienungsprofil charakteristischen Satz an Einstellungen, insbesondere an Grundeinstellungen, auf. Eine Einstellung und/oder eine Grundeinstellung könnte beispielsweise eine Art einer Ausgabe und/oder eine Verfügbarkeit zumindest einer Spezialfunktion und/oder eine Anzahl an Nutzern und/oder ein Alter zumindest eines Nutzers und/oder eine Verfügbarkeit an Rezepten und/oder eine Verfügbarkeit an Sensoren sein. Die Art einer Ausgabe könnte beispielsweise eine Darstellungsart und/oder eine Schriftgröße und/oder eine Schriftart und/oder eine Helligkeit insbesondere einer optischen Ausgabe und/oder eine Farbe, insbesondere einer optische Ausgabe und/oder eine Lautstärke insbesondere einer akustischen Ausgabe und/oder eine Dauer einer insbesondere akustischen Ausgabe und/oder eine Klangqualität insbesondere einer akustischen Ausgabe und/oder eine Sprache sein.

Bei zumindest einem der Bedienungsprofile könnte insbesondere eine aktuelle Analyse von Nutzerbedürfnissen berücksichtigt sein, wobei insbesondere am häufigsten vorkommende Bedürfnisse in dem Katalog beinhaltet sein könnten. Alternativ oder zusätzlich könnte zumindest eines der Bedienungsprofile insbesondere in Abhängigkeit zumindest einer Bedieneingabe mittels der Bedienerschnittstelle erstellt sein.

Unter einem "Katalog" an Bedienungsprofilen soll insbesondere eine Auswahl von mindestens zwei, insbesondere mindestens drei, vorteilhaft mindestens vier, besonders vorteilhaft mindestens fünf, vorzugsweise mindestens sieben und besonders bevorzugt mindestens zehn Bedienungsprofilen verstanden werden. Unter der Wendung, dass die Steuereinheit dazu vorgesehen ist, über die Ausgabeeinheit zumindest einen Katalog an Bedienungsprofilen für die Funktionseinheit "zu einer Auswahl" vorzuschlagen, soll insbesondere verstanden werden, dass die Steuereinheit in wenigstens einem Betriebszustand den Katalog an Bedienungsprofilen über die Ausgabeeinheit an einen Bediener insbesondere zusammen mit einer Bedienaufforderung ausgibt und insbesondere eine Bedieneingabe mittels der Bedienerschnittstelle abwartet, bevor die Steuereinheit zumindest eine weitere Aktion, wie beispielsweise ein ausgewähltes Bedienungsprofil, ausführt und/oder startet. Unter einer "Bedieneingabe" soll insbesondere eine optische und/oder akustische Eingabe mittels der Bedienerschnittstelle, insbesondere durch einen Bediener, verstanden werden.

Unter der Wendung, dass die Steuereinheit dazu vorgesehen ist, über die Ausgabeeinheit zumindest einen Katalog an Bedienungsprofilen für die Funktionseinheit zu einer Auswahl "vorzuschlagen", soll insbesondere verstanden werden, dass die Steuereinheit in wenigstens einem Betriebszustand den Katalog an Bedienungsprofilen automatisch über die Ausgabeeinheit ausgibt und/oder dass die Steuereinheit in wenigstens einem Betriebszustand den Katalog an Bedienungsprofilen in Abhängigkeit einer Bedieneingabe mittels einer Bedienerschnittstelle über die Ausgabeeinheit ausgibt. Unter "automatisch" soll insbesondere selbsttätig und/oder unter Vermeidung einer insbesondere direkten Bedieneingabe eines Nutzers und/oder unter Vermeidung eines insbesondere direkten Mitwirkens eines Nutzers verstanden werden. Beispielsweise könnte die Steuereinheit in wenigstens einem Betriebszustand den Katalog an Bedienungsprofilen automatisch bei einem Start der Funktionseinheit und/oder bei einer Beendigung zumindest eines Bedienungsprofils über die Ausgabeeinheit einem Nutzer insbesondere zu einer Auswahl ausgeben. Alternativ oder zusätzlich könnte die Steuereinheit insbesondere in wenigstens einem Betriebszustand den Katalog an Bedienungsprofilen automatisch bei einer Detektion einer Interaktion eines Nutzers über die Ausgabeeinheit einem Nutzer insbesondere zu einer Auswahl ausgeben. Die Interaktion eines Nutzers könnte beispielsweise ein Aufstellen eines Gargeschirrs auf eine Aufstellplatte, insbesondere eines als Kochfeld ausgebildeten Haushaltsgeräts, und/oder ein Einbringen eines Garguts in eine Muffel, insbesondere eines als Gargerät ausgebildeten Haushaltsgeräts, und/oder ein Einbringen von Lebensmitteln in einen Kälteraum, insbesondere eines als Kältegerät ausgebildeten Haushaltsgeräts, sein.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Haushaltsgerätesystem weist zumindest ein Haushaltsgerät auf, welches die Funktionseinheit aufweist. Die Funktionseinheit ist insbesondere in dem Haushaltsgerät integriert. Das als Gargerät ausgebildete Haushaltsgerät ist erfindungsgemäß ein Kochfeld und vorzugsweise ein Induktionskochfeld. Dadurch kann insbesondere ein besonders hoher Bedienkomfort ermöglicht werden.

Beispielsweise könnte die Steuereinheit wenigstens teilweise Teil zumindest eines Mobilgeräts insbesondere des Haushaltsgerätesystems und insbesondere wenigstens teilweise als eine Mobilgeräte-Steuereinheit ausgebildet sein. Alternativ oder zusätzlich könnte die Steuereinheit wenigstens teilweise Teil zumindest eines von dem Haushaltsgerät verschieden ausgebildeten weiteren Haushaltsgerät und insbesondere wenigstens teilweise als eine Haushaltsgeräte-Steuereinheit ausgebildet sein. Vorzugsweise ist die Steuereinheit wenigstens teilweise Teil des Haushaltsgeräts. Insbesondere ist die Steuereinheit wenigstens teilweise als eine Haushaltsgeräte-Steuereinheit ausgebildet. Unter der Wendung, dass ein erstes Objekt "wenigstens teilweise" Teil eines zweiten Objekts ist, soll insbesondere verstanden werden, dass das erste Objekt zumindest einen Teilbereich, insbesondere zumindest ein Element und/oder zumindest eine Einheit, aufweist, welcher Teil des zweiten Objekts ist und insbesondere zusätzlich zu dem Teilbereich zumindest einen weiteren Teilbereich aufweisen könnte, welcher insbesondere Teil zumindest eines von dem zweiten Objekt verschiedenen dritten Objekts sein könnte. Dadurch kann insbesondere auf ein weiteres Objekt, von welchem die Steuereinheit insbesondere wenigstens teilweise Teil sein könnte, verzichtet werden, wodurch insbesondere eine geringe Vielfalt an Objekten und/oder eine einfache Ausgestaltung erzielt werden kann.

Beispielsweise könnte die Ausgabeeinheit wenigstens teilweise Teil zumindest eines Mobilgeräts,insbesondere des Haushaltsgerätesystems und insbesondere wenigstens teilweise als eine Mobilgeräte-Ausgabeeinheit ausgebildet sein. Vorzugsweise ist die Ausgabeeinheit wenigstens teilweise Teil des Haushaltsgeräts. Insbesondere ist die Ausgabeeinheit wenigstens teilweise als eine Haushaltsgeräte-Ausgabeeinheit ausgebildet. Dadurch kann eine Ausgabe über die Ausgabeeinheit insbesondere direkt an dem Haushaltsgerät erfolgen, an welchem ein Nutzer aktiv ist, wodurch insbesondere eine Übertragung von einer externen Ausgabeeinheit auf das Haushaltsgerät vermieden und/oder ein hoher Bedienkomfort ermöglicht werden kann.

Die Ausgabeeinheit könnte insbesondere ausschließlich Teil des Haushaltsgeräts sein. Vorzugsweise weist das Haushaltsgerätesystem zumindest ein insbesondere von dem Haushaltsgerät verschiedenes weiteres Haushaltsgerät auf, von welchem die Ausgabeeinheit wenigstens teilweise Teil ist. Das Haushaltsgerät und das weitere Haushaltsgerät könnten insbesondere verschiedene Arten von Haushaltsgeräten sein. Beispielsweise könnte das Haushaltsgerät ein Gargerät und vorteilhaft ein Kochfeld und das weitere Haushaltsgerät ein Kältegerät und/oder ein Reinigungsgerät und/oder ein Skalierungsgerät sein. Insbesondere könnten das Haushaltsgerät und das weitere Haushaltsgerät eine gleiche Art von Haushaltsgeräten sein. Beispielsweise könnten das Haushaltsgerät und das weitere Haushaltsgerät insbesondere jeweils ein Gargerät und jeweils ein Kochfeld sein. Dadurch kann sich ein Nutzer, welcher insbesondere zu Gast bei einem weiteren Nutzer ist, insbesondere an dem weiteren Haushaltsgerät des weiteren Nutzers das ihm von seinem Haushaltsgerät bekannte Benutzungsprofil auswählen, wodurch insbesondere eine hohe Flexibilität und/oder eine hohe Nutzerzufriedenheit erreicht werden kann.

Zumindest eines der Bedienungsprofile ist ein Nutzerprofil. Unter einem "Nutzerprofil" soll ein auf einen Nutzer abgestimmtes Konto insbesondere eines informationstechnischen Systems, vorteilhaft eines zugangsbeschränkten informationstechnischen Systems, verstanden werden, mittels welchem sich ein Nutzer insbesondere in das System einwählen kann. Das Nutzerprofil könnte insbesondere passwortgeschützt sein. Bei einer Auswahl des Nutzerprofils könnte die Steuereinheit insbesondere in wenigstens einem Betriebszustand über die Ausgabeeinheit zumindest eine Bedienaufforderung zu einer Authentifizierung des Nutzers ausgeben. Die Authentifizierung des Nutzers könnte beispielsweise durch zumindest eine Bedieneingabe zumindest eines Passworts und/oder durch zumindest einen Fingerabdruck und/oder durch zumindest eine Spracherkennung erfolgen. Das informationstechnische System könnte insbesondere ein Betriebssystem des Haushaltsgeräts und/oder des weiteren Haushaltsgeräts und/oder des Mobilgeräts sein. In dem Nutzerprofil könnte insbesondere zumindest eine charakteristische Eigenschaft eines Nutzers und/oder zumindest eine charakteristische Vorliebe eines Nutzers und/oder zumindest ein Bedürfnis eines Nutzers und/oder persönliche Daten eines Nutzers gespeichert sein. Insbesondere könnte die Steuereinheit dazu vorgesehen sein, das Nutzerprofil, insbesondere zumindest eine in dem Nutzerprofil gespeicherte Information, auszuwerten und insbesondere in Abhängigkeit von dem Nutzerprofil, insbesondere von zumindest einer in dem Nutzerprofil gespeicherten Information, zumindest einen Vorschlag, insbesondere zumindest einen Rezeptvorschlag und/oder zumindest einen Vorschlag hinsichtlich eines insbesondere personenbezogen und/oder regionenbezogen Bedienungsprofils, über die Ausgabeeinheit auszugeben. Dadurch kann einem Nutzer insbesondere ein auf seine Bedürfnisse zugeschnittenes Profil, in welchem insbesondere persönliche Eigenschaften und/oder Vorlieben des Nutzers gespeichert sein könnten, bereitgestellt werden, wodurch insbesondere eine hohe Nutzerfreundlichkeit und/oder ein einfaches und/oder interaktives Zusammenwirken mit der Funktionseinheit ermöglicht werden kann. Insbesondere kann eine auf Nutzerwünsche angepasste Ausgestaltung erzielt werden.

Weiterhin wird vorgeschlagen, dass zumindest eines der Bedienungsprofile personenbezogen und/oder regionenbezogen ist. Unter einem "personenbezogenen" Bedienungsprofil soll insbesondere ein Bedienungsprofil verstanden werden, welches sich auf eine insbesondere derzeitige Situation eines Nutzers und/oder auf eine Anzahl an Nutzern bezieht. Beispielsweise könnte sich das personenbezogene Bedienungsprofil auf einen Gesundheitszustand eines Nutzers und/oder zumindest eine Allergie eines Nutzers und/oder auf eine Ernährungsweise eines Nutzers und/oder auf einen Aktivitätsgrad eines Nutzers und/oder auf zumindest eine kulinarische Vorliebe eines Nutzers und/oder auf eine Ernährungsgewohnheit eines Nutzers und/oder auf ein Alter eines Nutzers beziehen. Alternativ oder zusätzlich könnte sich das personenbezogene Bedienungsprofil insbesondere auf eine Anzahl an Nutzern beziehen, welche insbesondere gemeinsam und vorteilhaft zeitgleich das Haushaltsgerät nutzen, wie beispielsweise bei einer gemeinsamen Zubereitung zumindest eines Rezepts insbesondere im Falle eines als Gargerät ausgebildeten Haushaltsgeräts. Das personenbezogene Bedienungsprofil könnte sich insbesondere alternativ oder zusätzlich auf ein Wohngebiet eines Nutzers und/oder auf eine Wohnregion eines Nutzers und/oder ein Heimatland eines Nutzers und/oder einen Wohnsitz eines Nutzers und/oder eine geographische Lage eines Nutzers beziehen. Unter einem "regionenbezogenen" Bedienungsprofil soll insbesondere ein Bedienungsprofil verstanden werden, welches sich insbesondere auf einen geographisch begrenzten und/oder beschränkten Bereich, beispielsweise einen Landstrich und/oder einen Ort und/oder eine Region und/oder ein Land, bezieht. Beispielsweise könnte sich das regionenbezogene Bedienungsprofil auf eine regionale Küche und/oder eine regionale Ernährungsweise und/oder auf eine regionale Verfügbarkeit an Produkten beziehen. Insbesondere könnte die Steuereinheit dazu vorgesehen sein, in Abhängigkeit von dem personenbezogen und/oder regionenbezogen Bedienungsprofil zumindest ein Rezept über die Ausgabeeinheit vorzuschlagen. Dadurch kann insbesondere eine hohe Vielfalt an Bedienungsprofilen bereitgestellt werden, wodurch ein Nutzer insbesondere flexibel seinen derzeitigen Bedürfnissen entsprechend ein passendes Bedienungsprofil auswählen kann. Hierdurch kann insbesondere eine hohe Nutzerzufriedenheit und/oder ein hoher Identifikationsgrad und/oder eine längerfristige Markentreue ermöglicht werden.

Der Katalog weist zumindest zwei Bedienungsprofile auf, welche sich hinsichtlich einer Verfügbarkeit zumindest einer Spezialfunktion unterscheiden. Unter einer "Verfügbarkeit" zumindest einer Spezialfunktion soll insbesondere eine Möglichkeit einer Aktivierung der Spezialfunktion verstanden werden. Im Fall einer Verfügbarkeit einer Spezialfunktion kann ein Nutzer diese Spezialfunktion insbesondere durch eine Bedieneingabe mittels der Bedienerschnittstelle auswählen und/oder aktivieren und/oder deaktivieren. Im Fall einer fehlenden Verfügbarkeit einer Spezialfunktion ist eine Auswahl und/oder Aktivierung dieser Spezialfunktion durch einen Nutzer insbesondere unmöglich, da diese Spezialfunktion insbesondere durch die Steuereinheit blockiert und/oder deaktiviert ist und insbesondere nicht durch einen Nutzer auswählbar ist. Unter einer "Spezialfunktion" soll insbesondere eine Funktion verstanden werden, welche über einen gewöhnlichen Gebrauch eines Haushaltsgeräts hinausgeht. Zusätzlich könnte zumindest eine Spezialfunktion insbesondere zumindest eine insbesondere vordefinierte Heizleistungsdichte und/oder eine Verfügbarkeit einer maximalen Heizleistungsdichte und/oder eine Aufteilung an Heizeinheiten sein. Erfindungsgemäß ist die Spezialfunktion ein gemeinsamer Betrieb bestimmter Heizeinheiten. Zumindest eine Spezialfunktion könnte zusätzlich beispielsweise ein temperaturkontrollierter Garprozess und/oder eine als "Power Move" bezeichnete Kochfläche und/oder eine als "Teppan Yaki Mode" bezeichnete Kochfläche und/oder eine als "Flex Move" bezeichnete Kochfläche sein. Zu einer Durchführung der Spezialfunktion könnte das Haushaltsgerätesystem insbesondere zumindest eine Sensoreinheit aufweisen, welche insbesondere zumindest einen Temperatursensor und/oder zumindest einen Kochsensor und/oder zumindest einen Bratsensor aufweisen könnte. Dadurch kann insbesondere eine hohe Vielfalt an Bedienungsprofilen bereitgestellt werden, bei welchen insbesondere auch eine Erfahrung eines Nutzers hinsichtlich der Spezialfunktion berücksichtigt werden kann, wodurch insbesondere eine hohe Zufriedenheit insbesondere sowohl bei erfahrenen als auch bei unerfahrenen Nutzern ermöglicht werden kann.

Zudem wird vorgeschlagen, dass der Katalog zumindest zwei Bedienungsprofile aufweist, welche sich hinsichtlich einer Anzahl an Nutzern unterscheiden für welche insbesondere gemeinsam und vorteilhaft zeitgleich das Bedienungsprofil vorgesehen ist. Beispielsweise könnte die Anzahl an Nutzern eine Anzahl an Personen sein, welche gemeinsam ein Rezept zubereiten. Die Anzahl an Nutzern unterscheidet sich insbesondere von einer Portionsanzahl und/oder von einer Anzahl an Personen, auf welche eine Menge an verwendeten Zutaten abgestimmt ist, um insbesondere diese Personen zu sättigen. Dadurch kann insbesondere eine Ausführung der Haushaltsgerätehauptfunktion gemeinsam mit weiteren Nutzern ermöglicht werden, wodurch insbesondere eine hohe soziale Komponente und/oder eine hohe Nutzerzufriedenheit bei der Ausführung der Haushaltsgerätehauptfunktion erzielt werden kann.

Weiterhin wird vorgeschlagen, dass der Katalog zumindest zwei Bedienungsprofile aufweist, welche sich hinsichtlich eines Alters zumindest eines Nutzers unterscheiden. Beispielsweise könnte der Katalog an Bedienungsprofilen insbesondere zumindest ein Bedienungsprofil aufweisen, welches speziell für Kinder und/oder für ein Mitwirken von Kindern vorgesehen sein könnte. Alternativ oder zusätzlich könnte der Katalog an Bedienungsprofilen insbesondere zumindest ein Bedienungsprofil aufweisen, welches für eine bestimme Altersgruppe vorgesehen sein könnte. Der Katalog an Bedienungsprofilen könnte insbesondere zumindest ein Bedienungsprofil für Teenager und/oder für Personen in einem Alter von 20 bis 30 Jahren und/oder für Rentner und/oder für Senioren und/oder für Personen im mittleren Alter und/oder für Kinder und/oder für Erwachsene aufweisen. Dadurch kann insbesondere zumindest ein altersgerechtes Bedienungsprofil bereitgestellt werden, wodurch insbesondere eine hohe Flexibilität und/oder ein hoher Bedienkomfort erzielt werden kann.

Ferner wird vorgeschlagen, dass der Katalog zumindest zwei Bedienungsprofile aufweist, welche sich hinsichtlich einer Art einer Ausgabe über die Ausgabeeinheit unterscheiden, wodurch insbesondere eine bedarfsgerechte Ausgabe über die Ausgabeeinheit ermöglicht werden kann. Insbesondere kann eine auf Nutzerwünsche angepasste Darstellung über die Ausgabeeinheit erzielt werden.

Beispielsweise könnte eine Verfügbarkeit an Rezepten in den Bedienungsprofilen insbesondere wenigstens zu einem Großteil und vorteilhaft vollständig gleich sein. Insbesondere könnte zumindest ein Rezept, welches insbesondere Teil eines Nutzerprofils sein könnte, zumindest einem weiteren Nutzerprofil zum Download zur Verfügung stehen. Vorzugsweise weist der Katalog zumindest zwei Bedienungsprofile auf, welche sich hinsichtlich einer Verfügbarkeit an Rezepten unterscheiden. Unter einem "Rezept" soll insbesondere eine zeitliche Folge von Heizeinstellungen und/oder sonstigen Betriebseinstellungen und/oder Handlungsaufforderungen und/oder von Rezeptschritten zu einer Zubereitung wenigstens eines Lebensmittels, insbesondere wenigstens eines Garguts, verstanden werden. Die Heizeinstellungen weisen insbesondere wenigstens eine Heizdauer und/oder wenigstens eine Heizleistung und/oder wenigstens eine Heiztemperatur und/oder wenigstens eine Heizart, wie beispielsweise Braten und/oder Kochen und/oder Dämpfen und/oder Simmern und/oder Schmelzen und/oder Garen unter Druck, insbesondere in einem Druckkochtopf, und/oder Frittieren und/oder Sautieren und/oder Pochieren und/oder Backen und/oder Grillen, auf. Die Betriebseinstellungen weisen insbesondere zumindest eine Zeitdauer, welche eine Gesamtdauer des Rezepts definiert, und/oder zumindest eine zeitliche Abfolge von Rezeptschritten und/oder zumindest eine Art einer Ausgabe über die Ausgabeeinheit, wie beispielsweise optisch und/oder akustisch, auf. Das Rezept ist insbesondere als ein Kochrezept und/oder als ein Garrezept und/oder als ein Lebensmittelzubereitungsrezept ausgebildet. Dadurch kann insbesondere eine hohe Übersichtlichkeit und/oder eine einfache Bedienbarkeit erreicht werden, da ein Bedienungsprofil insbesondere ausschließlich geeignete und/oder passende Rezepte aufweisen könnte und insbesondere frei von unpassenden Rezepten sein könnte.

Insbesondere weist der Katalog zumindest zwei Bedienungsprofile auf, welche sich hinsichtlich einer Verfügbarkeit zumindest eines Kalenders und/oder zumindest eines Menüplaners und/oder an Rezeptvorschlägen unterscheiden. Dadurch kann insbesondere eine hohe Flexibilität erreicht werden

Die Steuereinheit könnte beispielsweise zumindest eine Speichereinheit aufweisen, in welcher insbesondere zumindest ein vordefiniertes Bedienungsprofil und vorteilhaft zumindest zwei, besonders vorteilhaft zumindest vier, vorzugsweise zumindest sechs und besonders bevorzugt mehrere vordefinierte Bedienungsprofile gespeichert sein könnten. Vorzugsweise ist die Steuereinheit dazu vorgesehen, über die Ausgabeeinheit durch eine Erstellung zumindest eines neuen Bedienungsprofils für den Katalog und/oder durch eine Bearbeitung zumindest eines existierenden Bedienungsprofils des Katalogs zu führen. Die Steuereinheit fügt in wenigstens einem Betriebszustand insbesondere das neu erstelle Bedienungsprofil und/oder das geänderte Bedienungsprofil dem Katalog hinzu und speichert das neu erstellte Bedienungsprofil und/oder das geänderte Bedienungsprofil insbesondere in zumindest einer Speichereinheit der Steuereinheit ab. Unter der Wendung, dass die Steuereinheit dazu vorgesehen ist, über die Ausgabeeinheit durch eine Erstellung zumindest eines neuen Bedienungsprofils für den Katalog zu "führen", soll insbesondere verstanden werden, dass die Steuereinheit in wenigstens einem Betriebszustand zumindest einen Nutzer mittels wenigstens einer Ausgabe über die Ausgabeeinheit zu zumindest einer Handlung auffordert und/oder zumindest eine Informationen ausgibt, und/oder dass die Steuereinheit in wenigstens einem Betriebszustand zu einer Erstellung zumindest des neuen Bedienungsprofils notwendige Schritte automatisch vornimmt und/oder einleitet. Unter "automatisch" soll insbesondere selbsttätig und/oder unter Vermeidung einer Interaktion mittels der Bedienerschnittstelle und/oder unter Vermeidung einer Handlung eines Bedieners verstanden werden. Dadurch kann insbesondere eine einfache Handhabung und/oder ein hoher Bedienkomfort erreicht werden.

Ferner wird vorgeschlagen, dass die Steuereinheit dazu vorgesehen ist, in Abhängigkeit zumindest einer Bedieneingabe insbesondere mittels der Bedienerschnittstelle zumindest eine Information zumindest eines ersten Bedienungsprofils für zumindest ein zweites Bedienungsprofils insbesondere zum Download zur Verfügung zu stellen. Insbesondere könnte die Information zumindest ein Rezept und/oder zumindest eine Grundeinstellung sein. Dadurch kann insbesondere ein hoher Bedienkomfort erreicht werden, da insbesondere auch von einem weiteren Haushaltsgerät aus auf persönliche Bedienungsprofile zurückgegriffen werden kann.

Ein Bedienkomfort kann insbesondere weiter gesteigert werden durch ein Verfahren zu einem Betrieb eines Haushaltsgerätesystems mit zumindest einer Ausgabeeinheit, mit zumindest einer Funktionseinheit, welche in wenigstens einem Betriebszustand zumindest eine Haushaltsgerätehauptfunktion ausführt, wobei über die Ausgabeeinheit zumindest ein Katalog an Bedienungsprofilen für die Funktionseinheit zu einer Auswahl vorgeschlagen wird.

Es zeigen:
- Fig. 1: ein Haushaltsgerätesystem in einer schematischen Draufsicht,
- Fig. 2: eine Ausgabeeinheit des Haushaltsgerätesystems in einem ersten Verfahrensschritt in einer schematischen Draufsicht,
- Fig. 3: die Ausgabeeinheit in einem zweiten Verfahrensschritt in einer schematischen Draufsicht und
- Fig. 4: die Ausgabeeinheit in einem dritten Verfahrensschritt in einer schematischen Draufsicht.

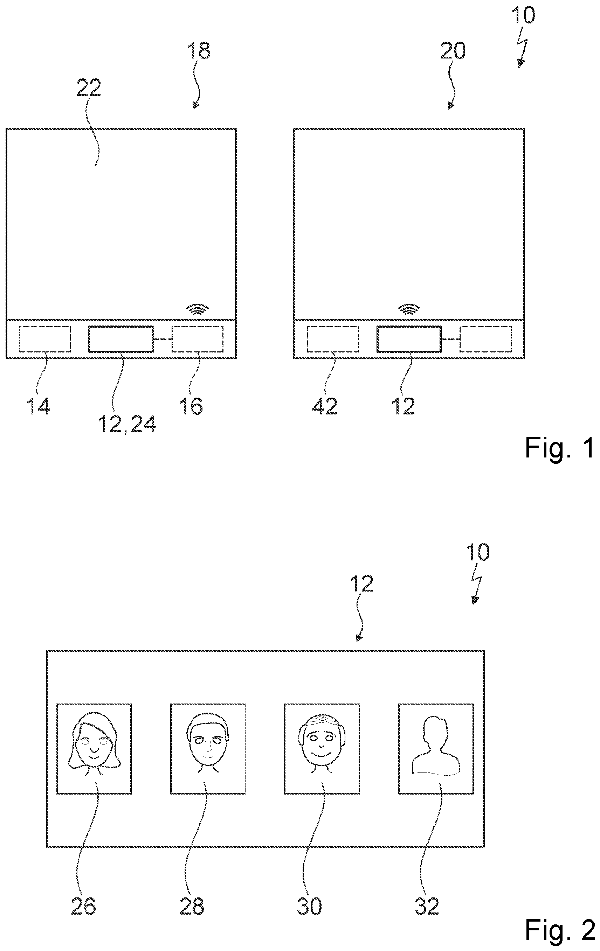

Fig. 1 zeigt ein Haushaltsgerätesystem 10, welches eine Funktionseinheit 14 aufweist. In einem Betriebszustand führt die Funktionseinheit 14 eine Haushaltsgerätehauptfunktion aus. Die Haushaltsgerätehauptfunktion ist im vorliegenden Ausführungsbeispiel eine Garfunktion, insbesondere zu einem Garen von Lebensmitteln.

Das Haushaltsgerätesystem 10 weist ein Haushaltsgerät 18 auf. Das Haushaltsgerät 18 ist im vorliegenden Ausführungsbeispiel ein Gargerät. Das als Gargerät ausgebildete Haushaltsgerät 18 ist ein Kochfeld, und zwar insbesondere ein Induktionskochfeld. Das Haushaltsgerät 18 weist die Funktionseinheit 14 auf. Die Funktionseinheit 14 ist Teil des Haushaltsgeräts 18.

Das als Gargerät ausgebildete Haushaltsgerät 18 weist eine Kochfeldplatte 22 auf. In einem montierten Zustand bildet die Kochfeldplatte 22 einen Teil eines Kochfeldaußengehäuses aus, und zwar insbesondere eines Kochfeldaußengehäuses insbesondere des als Gargerät ausgebildeten Haushaltsgeräts 18. Die Kochfeldplatte 22 ist zu einem Aufstellen von Gargeschirr vorgesehen (nicht dargestellt).

Das Haushaltsgerätesystem 10 weist eine Vielzahl an Heizeinheiten (nicht dargestellt) auf. Die Heizeinheiten sind in einer Einbaulage unterhalb der Kochfeldplatte 22 angeordnet. In einem montierten Zustand sind die Heizeinheiten in dem als Gargerät ausgebildeten Haushaltsgerät 18 integriert. Die Heizeinheiten sind Teil des Haushaltsgeräts 18. Die Heizeinheiten sind dazu vorgesehen, auf der Kochfeldplatte 22 oberhalb der Heizeinheiten aufgestelltes Gargeschirr zu erhitzen.

Das Haushaltsgerätesystem 10 weist eine Bedienerschnittstelle 24 zu einer Eingabe und/oder Auswahl von Betriebsparametern auf, beispielsweise einer Heizleistung und/oder einer Heizleistungsdichte und/oder einer Heizzone. Die Bedienerschnittstelle 24 ist zu einer Ausgabe eines Werts eines Betriebsparameters an einen Bediener vorgesehen. In einem montierten Zustand ist die Bedienerschnittstelle 24 in dem als Gargerät ausgebildeten Haushaltsgerät 18 integriert. Die Bedienerschnittstelle 24 ist Teil des Haushaltsgeräts 18.

Das Haushaltsgerätesystem 10 weist eine Ausgabeeinheit 12 auf. Die Ausgabeeinheit 12 ist teilweise einstückig mit der Bedienerschnittstelle 24 ausgebildet. Die Ausgabeeinheit 12 ist zu einer optischen Ausgabe an einen Bediener vorgesehen. Im vorliegenden Ausführungsbeispiel weist die Ausgabeeinheit 12 eine Flüssigkristallanzeige auf. In einem montierten Zustand ist die Ausgabeeinheit 12 teilweise in dem als Gargerät ausgebildeten Haushaltsgerät 18 integriert. Die Ausgabeeinheit 12 ist teilweise Teil des Haushaltsgeräts 18.

Das Haushaltsgerätesystem 10 weist eine Steuereinheit 16 auf. Die Steuereinheit 16 ist dazu vorgesehen, in Abhängigkeit von mittels der Bedienerschnittstelle 24 eingegebener Betriebsparameter Aktionen auszuführen und/oder Einstellungen zu verändern. Die Steuereinheit 16 regelt in einem Heizbetriebszustand eine Energiezufuhr zu den Heizeinheiten. In einem montierten Zustand ist die Steuereinheit 16 teilweise in dem als Gargerät ausgebildeten Haushaltsgerät 18 integriert. Die Steuereinheit 16 ist teilweise Teil des Haushaltsgeräts 18.

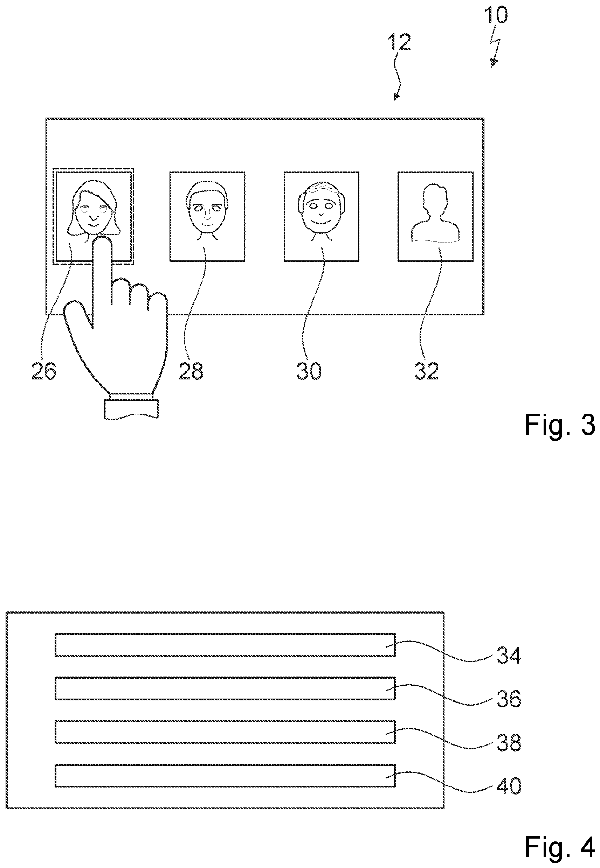

In einem Betriebszustand schlägt die Steuereinheit 16 über die Ausgabeeinheit 12 einen Katalog an Bedienungsprofilen 26, 28, 30, 32 für die Funktionseinheit 14 einem Nutzer zu einer Auswahl vor (vgl. Fig. 2 und 3). Die Steuereinheit 16 schlägt in einem Betriebszustand bei einem Start der Funktionseinheit 14 und/oder bei einem Start des Haushaltsgeräts 18, welches die Funktionseinheit 14 aufweist, einen Katalog an Bedienungsprofilen 26, 28, 30, 32 für die Funktionseinheit 14 einem Nutzer zu einer Auswahl vor. Zumindest eines der Bedienungsprofile 26, 28, 30, 32 des Katalogs ist ein Nutzerprofil. Im vorliegenden Ausführungsbeispiel sind vier Bedienungsprofile 26, 28, 30, 32 des Katalogs jeweils ein Nutzerprofil.

Ein Bedienungsprofil 26, welches ein Nutzerprofil ist, trägt insbesondere die Bezeichnung "Mutter" und ist insbesondere ein für die Mutter vorgesehenes und/oder von der Mutter erstelltes Nutzerprofil. Ein Bedienungsprofil 28, welches ein Nutzerprofil ist, trägt insbesondere die Bezeichnung "Vater" und ist insbesondere ein für den Vater vorgesehenes und/oder von dem Vater erstelltes Nutzerprofil. Ein Bedienungsprofil 30, welches ein Nutzerprofil ist, trägt insbesondere die Bezeichnung "Großvater" und ist insbesondere ein für den Großvater vorgesehenes und/oder von dem Großvater erstelltes Nutzerprofil. Ein Bedienungsprofil 32, welches ein Nutzerprofil ist, trägt insbesondere die Bezeichnung "Gast" und ist insbesondere ein für einen Gast der Familie vorgesehenes Nutzerprofil. Das Bedienungsprofil 32, welches ein Nutzerprofil ist und insbesondere die Bezeichnung "Gast" trägt, ist in einer Speichereinheit der Steuereinheit 16 gespeichert und weist vordefinierte Grundeinstellungen auf.

Der Katalog weist zumindest zwei Bedienungsprofile 26, 28, 30, 32 auf, welche sich hinsichtlich einer Art einer Ausgabe über die Ausgabeeinheit 12 unterscheiden. Im vorliegenden Ausführungsbeispiel weist der Katalog vier Bedienungsprofile 26, 28, 30, 32 auf, welche sich hinsichtlich einer Art einer Ausgabe über die Ausgabeeinheit 12 unterscheiden. Im vorliegenden Ausführungsbeispiel unterscheidet sich das Bedienungsprofil 30, welches ein Nutzerprofil ist und insbesondere die Bezeichnung "Großvater" trägt, hinsichtlich der Art einer Ausgabe über die Ausgabeeinheit 12 von dem Bedienungsprofil 28, welches ein Nutzerprofil ist und insbesondere die Bezeichnung "Vater" trägt. Das Bedienungsprofil 30, welches ein Nutzerprofil ist und insbesondere die Bezeichnung "Großvater" trägt, weist eine größere Schriftgröße und/oder eine höhere Lautstärke einer akustischen Ausgabe auf als das Bedienungsprofil 28, welches ein Nutzerprofil ist und insbesondere die Bezeichnung "Vater" trägt.

Der Katalog weist zumindest zwei Bedienungsprofile 26, 28, 30, 32 auf, welche sich hinsichtlich einer Verfügbarkeit an Spezialfunktionen unterscheiden. Im vorliegenden Ausführungsbeispiel unterscheidet sich das Bedienungsprofil 26, welches ein Nutzerprofil ist und insbesondere die Bezeichnung "Mutter" trägt, hinsichtlich einer Verfügbarkeit an Spezialfunktionen von dem Bedienungsprofil 28, welches ein Nutzerprofil ist und insbesondere die Bezeichnung "Vater" trägt. In dem Bedienungsprofil 26, welches ein Nutzerprofil ist und insbesondere die Bezeichnung "Mutter" trägt, sind Spezialfunktionen im Gegensatz zu dem Bedienungsprofil 28, welches ein Nutzerprofil ist und insbesondere die Bezeichnung "Vater" trägt, verfügbar.

Der Katalog weist zumindest zwei Bedienungsprofile 26, 28, 30, 32 auf, welche sich hinsichtlich einer Verfügbarkeit an Rezepten unterscheiden. Im vorliegenden Ausführungsbeispiel weist der Katalog vier Bedienungsprofile 26, 28, 30, 32 auf, welche sich hinsichtlich einer Verfügbarkeit an Rezepten unterscheiden. Im vorliegenden Ausführungsbeispiel unterscheidet sich das Bedienungsprofil 26, welches ein Nutzerprofil ist und insbesondere die Bezeichnung "Mutter" trägt, hinsichtlich einer Verfügbarkeit an Rezepten von dem Bedienungsprofil 30, welches ein Nutzerprofil ist und insbesondere die Bezeichnung "Großvater" trägt. In dem Bedienungsprofil 26, welches ein Nutzerprofil ist und insbesondere die Bezeichnung "Mutter" trägt, sind eine größere Anzahl an Rezepten verfügbar als in dem Bedienungsprofil 30, welches ein Nutzerprofil ist und insbesondere die Bezeichnung "Großvater" trägt.

Der Katalog weist zumindest zwei Bedienungsprofile 26, 28, 30, 32 auf, welche sich hinsichtlich eines Alters zumindest eines Nutzers unterscheiden. Im vorliegenden Ausführungsbeispiel unterscheidet sich das Bedienungsprofil 26, welches ein Nutzerprofil ist und insbesondere die Bezeichnung "Mutter" trägt, hinsichtlich eines Alters zumindest eines Nutzers von dem Bedienungsprofil 30, welches ein Nutzerprofil ist und insbesondere die Bezeichnung "Großvater" trägt.

In einem Verfahren zu einem Betrieb des Haushaltsgerätesystems 10 wird über die Ausgabeeinheit 12 ein Katalog an Bedienungsprofilen 26, 28, 30, 32 für die Funktionseinheit 14 zu einer Auswahl vorgeschlagen (vgl. Fig. 2). Die Steuereinheit 16 stellt in einem Betriebszustand die Bedienungsprofile 26, 28, 30, 32 optisch, insbesondere in Form von Icons und vorteilhaft in Form von Profilbild und/oder von Profilname, über die Ausgabeeinheit 12 zu einer Auswahl dar. In einem Betriebszustand wählt die Steuereinheit 16 in Abhängigkeit von einer Bedieneingabe ein Bedienungsprofil 26, 28, 30, 32 aus. Im vorliegenden Ausführungsbeispiel wählt die Steuereinheit 16 in Abhängigkeit von einer Bedieneingabe das Bedienungsprofil 26, welches ein Nutzerprofil ist und insbesondere die Bezeichnung "Mutter" trägt, aus (vgl. Fig. 3). Die Steuereinheit 16 lädt, insbesondere im Anschluss an eine Bedieneingabe, in dem ausgewählten Bedienungsprofil 26 gespeicherte Grundeinstellungen.

Beispielsweise will ein Nutzer in dem Bedienungsprofil, welches ein Nutzerprofil ist, ein Bedienungsprofil 34, 36, 38, 40 auswählen, welches personenbezogen und/oder regionenbezogen ist (vgl. Fig. 4). Die Steuereinheit 16 schlägt in einem Betriebszustand über die Ausgabeeinheit 12 einen Katalog an Bedienungsprofilen 34, 36, 38, 40 für die Funktionseinheit 14 einem Nutzer zu einer Auswahl vor. In einem Betriebszustand schlägt die Steuereinheit 16 über die Ausgabeeinheit 12 einen Katalog an Bedienungsprofilen 34, 36, 38, 40 für die Funktionseinheit 14 in Form einer Liste einem Nutzer zu einer Auswahl vor.

Zumindest eines der Bedienungsprofile 34, 36, 38, 40 ist personenbezogen und/oder regionenbezogen. Im vorliegenden Ausführungsbeispiel sind vier Bedienungsprofile 34, 36, 38, 40 personenbezogen und/oder regionenbezogen. Drei Bedienungsprofile 34, 36, 38 sind personenbezogen. Ein Bedienungsprofil 40 ist regionenbezogen.

Ein Bedienungsprofil 34, welches personenbezogen ist, trägt insbesondere die Bezeichnung "Head Chef Mode" und ist insbesondere für zumindest zwei Nutzer gleichzeitig vorgesehen. Der Katalog weist zumindest zwei Bedienungsprofile auf, welche sich hinsichtlich einer Anzahl an Nutzern unterscheiden. Das Bedienungsprofil 34, welches personenbezogen ist und insbesondere die Bezeichnung "Head Chef Mode" trägt, weist eine Anzahl an Nutzern auf, die gemeinsam ein Rezept zubereiten. In einem Betriebszustand schlägt die Steuereinheit 16 in Abhängigkeit einer Anzahl an mitwirkenden Personen bei einer Auswahl des Bedienungsprofils 34, welches personenbezogen ist und insbesondere die Bezeichnung "Head Chef Mode" trägt, über die Ausgabeeinheit 12 zumindest ein Rezept vor. Die Steuereinheit 16 schlägt in Abhängigkeit einer Auswahl des Bedienungsprofils 34, welches personenbezogen ist und insbesondere die Bezeichnung "Head Chef Mode" trägt, über die Ausgabeeinheit 12 Rezeptschritte vor, und zwar insbesondere für jeden mitwirkenden Nutzer geeignete Rezeptschritte. Beispielsweise könnte die Steuereinheit 16 in Abhängigkeit einer Auswahl des Bedienungsprofils 34, welches personenbezogen ist und insbesondere die Bezeichnung "Head Chef Mode" trägt, über die Ausgabeeinheit 12 einen komplizierten Rezeptschritt für einen Hauptmitwirkenden und einen einfachen Rezeptschritt für einen Nebenmitwirkenden vorschlagen.

Ein Bedienungsprofil 36, welches personenbezogen ist, trägt insbesondere die Bezeichnung "Child Cooking Mode" und ist insbesondere für ein Mitwirken zumindest eines Kinds vorgesehen. Die Steuereinheit 16 schlägt in Abhängigkeit einer Auswahl des Bedienungsprofils 36, welches personenbezogen ist und insbesondere die Bezeichnung "Child Cooking Mode" trägt, über die Ausgabeeinheit 12 zumindest ein Rezept vor, welches für ein Mitwirken von Kindern vorgesehen ist und welches insbesondere zumindest einen einfach durchführbaren Rezeptschritt aufweist, In einem Betriebszustand schlägt die Steuereinheit 16 in Abhängigkeit einer Auswahl des Bedienungsprofils 36, welches personenbezogen ist und insbesondere die Bezeichnung "Child Cooking Mode" trägt, über die Ausgabeeinheit 12 zumindest einen Rezeptschritt vor, welcher für eine Durchführung von einem Kind vorgesehen ist und/oder welcher für eine Durchführung von einem Erwachsenen vorgesehen ist. Die Steuereinheit 16 aktiviert insbesondere automatisch in einem Betriebszustand in Abhängigkeit einer Auswahl des Bedienungsprofils 36, welches personenbezogen ist und insbesondere die Bezeichnung "Child Cooking Mode" trägt, zumindest einen Sicherheitsmodus, wie beispielsweise eine Kindersicherung, um insbesondere das Kind bei der Zubereitung des Rezepts zu schützen.

Ein Bedienungsprofil 38, welches personenbezogen ist, trägt insbesondere die Bezeichnung "Basic Cooking Mode" und ist insbesondere zu einer Durchführung von durchschnittlichen Garvorgängen, welche sich insbesondere von Spezialfunktionen unterscheiden, vorgesehen. In dem Bedienungsprofil 38, welches personenbezogen ist und insbesondere die Bezeichnung "Basic Cooking Mode" trägt, sind insbesondere lediglich Standard-Funktionen verfügbar und Spezialfunktionen insbesondere deaktiviert. Der Katalog weist zumindest zwei Bedienungsprofile 34, 36, 38, 40 auf, welche sich hinsichtlich einer Verfügbarkeit zumindest einer Spezialfunktion unterscheiden.

Ein Bedienungsprofil 40, welches regionenbezogen ist, trägt insbesondere die Bezeichnung "Oriental Cooking Mode" und ist insbesondere zu einer Zubereitung von orientalischen Rezepten vorgesehen. In einem Betriebszustand schlägt die Steuereinheit 16 in Abhängigkeit einer Auswahl des Bedienungsprofils 40, welches regionenbezogen ist und insbesondere die Bezeichnung "Oriental Cooking Mode" trägt, über die Ausgabeeinheit 12 zumindest ein orientalisches Rezept vor. Der Katalog weist zumindest zwei Bedienungsprofile 34, 36, 38, 40 auf, welche sich hinsichtlich einer Verfügbarkeit an Rezepten unterscheiden. Die Steuereinheit 16 aktiviert insbesondere automatisch in einem Betriebszustand in Abhängigkeit einer Auswahl des Bedienungsprofils 40, welches regionenbezogen ist und insbesondere die Bezeichnung "Oriental Cooking Mode" trägt, zumindest eine Spezialfunktion, wie beispielsweise eine als "Teppan Yaki Mode" bezeichnete Kochfläche, und/oder spezielles Gargeschirr, wie insbesondere einen WOK und/oder eine Teppan Yaki Platte.

In einem Betriebszustand führt die Steuereinheit 16 über die Ausgabeeinheit 12 durch eine Erstellung zumindest eines neuen Bedienungsprofils 26, 28, 30, 32, 34, 36, 38, 40 für den Katalog, und zwar insbesondere durch ein neues Bedienungsprofil 26, 28, 30, 32, welches ein Nutzerprofil ist, und/oder durch ein neues Bedienungsprofil 34, 36, 38, 40, welches personenbezogen und/oder regionenbezogen ist. In einem Fall, in welchem der Katalog genau ein Bedienungsprofil 26, 28, 30, 32, welches ein Nutzerprofil ist, aufweist, führt die Steuereinheit 16 über die Ausgabeeinheit 12 durch eine Erstellung eines neuen Bedienungsprofils 26, 28, 30, 32, welches ein Nutzerprofil ist, für den Katalog. Das Bedienungsprofil 26, 28, 30, 32, welches ein Nutzerprofil ist und welches das einzige Nutzerprofil in dem Katalog ist, trägt insbesondere die Bezeichnung "Gast". Alternativ könnte die Steuereinheit 16 einem Nutzer, welcher noch kein Nutzerprofil aufweist, über die Ausgabeeinheit 12 vorschlagen, sich über das als "Gast" bezeichnete Nutzerprofil einzuwählen und/oder anzumelden.

Die Steuereinheit 16 stellt in einem Betriebszustand in Abhängigkeit einer Bedieneingabe eine Information eines ersten Bedienungsprofils für ein zweites Bedienungsprofil zur Verfügung. Beispielsweise stellt die Steuereinheit 16 ausgehend von einem ersten Bedienungsprofil 26, 28, 30, 32, welches ein Nutzerprofil ist, in einem Betriebszustand in Abhängigkeit einer Bedieneingabe ein Bedienungsprofil 34, 36, 38, 40, welches personenbezogen und/oder regionenbezogen ist, für ein zweites Bedienungsprofil 26, 28, 30, 32, welches ein Nutzerprofil ist, zur Verfügung.

Die Steuereinheit 16 stellt in einem Betriebszustand ein Bedienungsprofil 26, 28, 30, 32, welches ein Nutzerprofil ist, für eine weitere Funktionseinheit 42 eines weiteren Haushaltsgeräts 20 zur Verfügung. Das Haushaltsgerätesystem 10 weist das weitere Haushaltsgerät 20 auf (vgl. Fig. 1). Das weitere Haushaltsgerät 20 ist im vorliegenden Ausführungsbeispiel ein Gargerät. Das als Gargerät ausgebildete weitere Haushaltsgerät 20 ist ein Kochfeld, und zwar insbesondere ein Induktionskochfeld. Das weitere Haushaltsgerät 20 weist die weitere Funktionseinheit 42 auf. Die weitere Funktionseinheit 42 ist Teil des weiteren Haushaltsgeräts 20. Die Ausgabeeinheit 12 ist teilweise Teil des weiteren Haushaltsgeräts 20. Ein Nutzer kann sich mit seinem Bedienungsprofil 26, 28, 30, 32, welches ein Nutzerprofil ist und welches ihm insbesondere von dem Haushaltsgerät 18 bekannt ist, auf dem weiteren Haushaltsgerät 20 anmelden.

### BEZUGSZEICHEN

- 10: Haushaltsgerätesystem
- 12: Ausgabeeinheit
- 14: Funktionseinheit
- 16: Steuereinheit
- 18: Haushaltsgerät
- 20: Weiteres Haushaltsgerät
- 22: Kochfeldplatte
- 24: Bedienerschnittstelle
- 26: Bedienungsprofil
- 28: Bedienungsprofil
- 30: Bedienungsprofil
- 32: Bedienungsprofil
- 34: Bedienungsprofil
- 36: Bedienungsprofil
- 38: Bedienungsprofil
- 40: Bedienungsprofil
- 42: Weitere Funktionseinheit

## Patentansprüche

1. Haushaltsgerätesystem mit zumindest einer Ausgabeeinheit (12), mit zumindest einer Funktionseinheit (14), welche in wenigstens einem Betriebszustand zumindest eine Haushaltsgerätehauptfunktion ausführt, wobei die Haushaltsgerätehauptfunktion eine Garfunktion ist, und mit zumindest einer Steuereinheit (16), die dazu vorgesehen ist, über die Ausgabeeinheit (12) zumindest einen Katalog an Bedienungsprofilen (26, 28, 30, 32, 34, 36, 38, 40) für die Funktionseinheit (14) zu einer Auswahl vorzuschlagen, wobei zumindest eines der Bedienungsprofile (26, 28, 30, 32) ein Nutzerprofil, und zwar ein auf einen Nutzer abgestimmtes Konto, ist, und wobei die Steuereinheit (16) dazu vorgesehen ist, im Anschluss an eine Bedieneingabe in dem ausgewählten Bedienungsprofil (26, 28, 30, 32, 34, 36, 38, 40) gespeicherte Grundeinstellungen zu laden, wobei der Katalog zumindest zwei Bedienungsprofile (26, 28, 30, 32, 34, 36, 38, 40) aufweist, welche sich hinsichtlich einer Verfügbarkeit zumindest einer Spezialfunktion unterscheiden, **gekennzeichnet durch** zumindest ein als Kochfeld ausgebildetes Haushaltsgerät (18), welches die Funktionseinheit (14) aufweist, wobei die Spezialfunktion ein gemeinsamer Betrieb bestimmter Heizeinheiten ist.

2. Haushaltsgerätesystem nach Anspruch 1, **dadurch gekennzeichnet, dass** die Steuereinheit (16) wenigstens teilweise Teil des Haushaltsgeräts (18) ist.

3. Haushaltsgerätesystem nach Anspruch 1 oder 2, **dadurch gekennzeichnet, dass** die Ausgabeeinheit (12) wenigstens teilweise Teil des Haushaltsgeräts (18) ist.

4. Haushaltsgerätesystem nach einem der vorhergehenden Ansprüche, **gekennzeichnet durch** zumindest ein weiteres Haushaltsgerät (20), von welchem die Ausgabeeinheit (12) wenigstens teilweise Teil ist.

5. Haushaltsgerätesystem nach einem der vorhergehenden Ansprüche, **dadurch gekennzeichnet, dass** zumindest eines der Bedienungsprofile (34, 36, 38, 40) personenbezogen und/oder regionenbezogen ist.

6. Haushaltsgerätesystem nach einem der vorhergehenden Ansprüche, **dadurch gekennzeichnet, dass** der Katalog zumindest zwei Bedienungsprofile (26, 28, 30, 32, 34, 36, 38, 40) aufweist, welche sich hinsichtlich einer Anzahl an Nutzern unterscheiden.

7. Haushaltsgerätesystem nach einem der vorhergehenden Ansprüche, **dadurch gekennzeichnet, dass** der Katalog zumindest zwei Bedienungsprofile (26, 28, 30, 32, 34, 36, 38, 40) aufweist, welche sich hinsichtlich eines Alters zumindest eines Nutzers unterscheiden.

8. Haushaltsgerätesystem nach einem der vorhergehenden Ansprüche, **dadurch gekennzeichnet, dass** der Katalog zumindest zwei Bedienungsprofile (26, 28, 30, 32, 34, 36, 38, 40) aufweist, welche sich hinsichtlich einer Art einer Ausgabe über die Ausgabeeinheit (12) unterscheiden.

9. Haushaltsgerätesystem nach einem der vorhergehenden Ansprüche, **dadurch gekennzeichnet, dass** der Katalog zumindest zwei Bedienungsprofile (26, 28, 30, 32, 34, 36, 38, 40) aufweist, welche sich hinsichtlich einer Verfügbarkeit an Rezepten unterscheiden.

10. Haushaltsgerätesystem nach einem der vorhergehenden Ansprüche, **dadurch gekennzeichnet, dass** die Steuereinheit (16) dazu vorgesehen ist, über die Ausgabeeinheit (12) durch eine Erstellung zumindest eines neuen Bedienungsprofils (26, 28, 30, 32, 34, 36, 38, 40) für den Katalog zu führen.

11. Haushaltsgerätesystem nach einem der vorhergehenden Ansprüche, **dadurch gekennzeichnet, dass** die Steuereinheit (16) dazu vorgesehen ist, in Abhängigkeit zumindest einer Bedieneingabe zumindest eine Information zumindest eines ersten Bedienungsprofils (26, 28, 30, 32, 34, 36, 38, 40) für zumindest ein zweites Bedienungsprofil (26, 28, 30, 32, 34, 36, 38, 40) zur Verfügung zu stellen.

12. Verfahren zu einem Betrieb eines Haushaltsgerätesystems, insbesondere nach einem der Ansprüche 1 bis 11, mit zumindest einer Ausgabeeinheit (12), mit zumindest einer Funktionseinheit (14), welche in wenigstens einem Betriebszustand zumindest eine Haushaltsgerätehauptfunktion ausführt, wobei die Haushaltsgerätehauptfunktion eine Garfunktion ist, und mit einem als Kochfeld ausgebildeten Haushaltsgerät (18), welches die Funktionseinheit (14) aufweist, wobei über die Ausgabeeinheit (12) zumindest ein Katalog an Bedienungsprofilen (26, 28, 30, 32, 34, 36, 38, 40), wobei zumindest eines der Bedienungsprofile (26, 28, 30, 32) ein Nutzerprofil, und zwar ein auf einen Nutzer abgestimmtes Konto, ist, für die Funktionseinheit (14) zu einer Auswahl vorgeschlagen wird, wobei im Anschluss an eine Bedieneingabe in dem ausgewählten Bedienungsprofil (26, 28, 30, 32, 34, 36, 38, 40) gespeicherte Grundeinstellungen geladen werden, wobei der Katalog zumindest zwei Bedienungsprofile (26, 28, 30, 32, 34, 36, 38, 40) aufweist, welche sich hinsichtlich einer Verfügbarkeit zumindest einer Spezialfunktion unterscheiden, und wobei die Spezialfunktion ein gemeinsamer Betrieb bestimmter Heizeinheiten ist.

## Claims

1. Household appliance system with at least one output unit (12), with at least one functional unit (14), which in at least one operating state carries out at least one household appliance main function, wherein the household appliance main function is a cooking function, and with at least one control unit (16), which is provided to propose, via the output unit (12), for selection, at least one catalogue of operation profiles (26, 28, 30, 32, 34, 36, 38, 40) for the functional unit (14), wherein at least one of the operation profiles (26, 28, 30, 32) is a user profile, specifically an account adapted for a user, and wherein the control unit (16) is provided to load basic settings stored in the selected operator profile (26, 28, 30, 32, 34, 36, 38, 40) following an operator input, wherein the catalogue has at least two operator profiles (26, 28, 30, 32, 34, 36, 38, 40), which differ in respect of an availability of at least one special function, **characterised by** at least one household appliance (18) embodied as a hob, which has the functional unit (14), wherein the special function is a shared operation of specific heating units.

2. Household appliance system according to claim 1, **characterised in that** the control unit (16) is at least in part part of the household appliance (18).

3. Household appliance system according to claim 1 or 2, **characterised in that** the output unit (12) is at least in part part of the household appliance (18).

4. Household appliance system according to one of the preceding claims, **characterised by** at least one further household appliance (20), of which the output unit (12) is at least in part a part.

5. Household appliance system according to one of the preceding claims, **characterised in that** at least one of the operator profiles (34, 36, 38, 40) relates to a person and/or a region.

6. Household appliance system according to one of the preceding claims, **characterised in that** the catalogue has at least two operator profiles (26, 28, 30, 32, 34, 36, 38, 40), which differ in respect of a number of users.

7. Household appliance system according to one of the preceding claims, **characterised in that** the catalogue has at least two operator profiles (26, 28, 30, 32, 34, 36, 38, 40) which differ in respect of an age of at least one user.

8. Household appliance system according to one of the preceding claims, **characterised in that** the catalogue has at least two user profiles (26, 28, 30, 32, 34, 36, 38, 40) which differ in respect of a type of output via the output unit (12).

9. Household appliance system according to one of the preceding claims, **characterised in that** the catalogue has at least two operation profiles (26, 28, 30, 32, 34, 36, 38, 40) which differ in respect of an availability of recipes.

10. Household appliance system according to one of the preceding claims, **characterised in that** the control unit (16) is provided to guide through creating at least one new operating profile (26, 28, 30, 32, 34, 36, 38, 40) for the catalogue via the output unit (12).

11. Household appliance system according to one of the preceding claims, **characterised in that** the control unit (16) is provided to provide at least one item of information about at least one first operator profile (26, 28, 30, 32, 34, 36, 38, 40) for at least one second operator profile (26, 28, 30, 32, 34, 36, 38, 40) as a function of at least one operator input.

12. Method for operating a household appliance system, in particular according to one of claims 1 to 11, with at least one output unit (12), with at least one functional unit (14) which, in at least one operator state, carries out at least one household appliance main function, wherein the household appliance main function is a cooking function, and with a household appliance (18) embodied as a hob, which has the functional unit (14), wherein at least one catalogue of operator profiles (26, 28, 30, 32, 34, 36, 38, 40) is proposed for selection for the functional unit (14) via the output unit (12), wherein at least one of the operator profiles (26, 28, 30, 32) is a user profile, specifically an account adapted for a user, wherein basic settings stored in the selected operator profile (26, 28, 30, 32, 34, 36, 38, 40) are loaded following an operator input, wherein the catalogue has at least two operator profiles (26, 28, 30, 32, 34, 36, 40), which differ in respect of an availability of at least one special function, and wherein the special function is a shared operation of specific heating units.

## Revendications

1. Système d'appareil ménager comprenant au moins une unité émettrice (12), comprenant au moins une unité fonctionnelle (14) qui, dans au moins un état de fonctionnement, exécute au moins une fonction principale d'appareil ménager, dans lequel la fonction principale d'appareil ménager est une fonction de cuisson, et comprenant au moins une unité de commande (16) qui est prévue pour proposer par le biais de l'unité émettrice (12), au moins un catalogue de profils d'utilisation (26, 28, 30, 32, 34, 36, 38, 40) pour l'unité fonctionnelle (14) en vue d'une sélection, dans lequel au moins un des profils d'utilisation (26, 28, 30, 32) est un profil utilisateur, et particulièrement un compte défini sur un utilisateur, et dans lequel l'unité de commande (16) est prévue pour charger des paramètres de base enregistrés dans le profil d'utilisation (26, 28, 30, 32, 34, 36, 38, 40) à la suite d'une saisie d'utilisation, dans lequel le catalogue présente au moins deux profils d'utilisation (26, 28, 30, 32, 34, 36, 38, 40) qui se différencient par une disponibilité d'au moins une fonction spéciale, **caractérisé par** au moins un appareil ménager (18) construit en tant que table de cuisson qui présente l'unité fonctionnelle (14), dans lequel la fonction spéciale est un fonctionnement commun d'unités chauffantes définies.

2. Système d'appareil ménager selon la revendication 1, **caractérisé en ce que** l'unité de commande (16) fait au moins partiellement partie de l'appareil ménager (18).

3. Système d'appareil ménager selon la revendication 1 ou 2, **caractérisé en ce que** l'unité fonctionnelle (12) fait au moins partiellement partie de l'appareil ménager (18).

4. Système d'appareil ménager selon l'une des revendications précédentes, **caractérisé par** au moins un autre appareil ménager (20) duquel l'unité émettrice (12) fait au moins partiellement partie.

5. Système d'appareil ménager selon l'une des revendications précédentes, **caractérisé en ce qu'**au moins un des profils d'utilisation (34, 36, 38, 40) est lié à des personnes et/ou lié à des régions.

6. Système d'appareil ménager selon l'une des revendications précédentes, **caractérisé en ce que** le catalogue présente au moins deux profils d'utilisation (26, 28, 30, 32, 34, 36, 38, 40) qui se distinguent par un nombre d'utilisateurs.

7. Système d'appareil ménager selon l'une des revendications précédentes, **caractérisé en ce que** le catalogue présente au moins deux profils d'utilisation (26, 28, 30, 32, 34, 36, 38, 40) qui se distinguent par un âge d'au moins un utilisateur.

8. Système d'appareil ménager selon l'une des revendications précédentes, **caractérisé en ce que** le catalogue présente au moins deux profils d'utilisation (26, 28, 30, 32, 34, 36, 38, 40) qui se distinguent par un type d'une émission par le biais de l'unité émettrice (12).

9. Système d'appareil ménager selon l'une des revendications précédentes, **caractérisé en ce que** le catalogue présente au moins deux profils d'utilisation (26, 28, 30, 32, 34, 36, 38, 40) qui se distinguent par une disponibilité de recettes.

10. Système d'appareil ménager selon l'une des revendications précédentes, **caractérisé en ce que** l'unité de commande (16) est prévue pour commander par le biais de l'unité émettrice (12), la création d'au moins un profil d'utilisation (26, 28, 30, 32, 34, 36, 38, 40) pour le catalogue.

11. Système d'appareil ménager selon l'une des revendications précédentes, **caractérisé en ce que** l'unité de commande (16) est prévue pour mettre à disposition d'au moins un second profil d'utilisation (26, 28, 30, 32, 34, 36, 38, 40) au moins une information d'au moins un premier profil d'utilisation (26, 28, 30, 32, 34, 36, 38, 40), en fonction d'au moins une saisie d'utilisation.

12. Procédé de fonctionnement d'un système d'appareil ménager, en particulier selon l'une des revendications 1 à 11, comprenant au moins une unité émettrice (12), comprenant au moins une unité fonctionnelle (14) qui, dans au moins un état de fonctionnement, exécute au moins une fonction principale d'appareil ménager, dans lequel la fonction principale d'appareil ménager est une fonction de cuisson, et comprenant un appareil ménager (18) construit en tant que table de cuisson qui présente l'unité fonctionnelle (14), dans lequel, par le biais de l'unité émettrice (12), au moins un catalogue de profils d'utilisation (26, 28, 30, 32, 34, 36, 38, 40), dans lequel au moins un des profils d'utilisation (26, 28, 30, 32) est un profil d'utilisateur, et particulièrement un compte défini sur un utilisateur, est proposé pour une sélection pour l'unité fonctionnelle (14), dans lequel des paramètres de base enregistrés dans le profil d'utilisation (26, 28, 30, 32, 34, 36, 38, 40) sélectionné sont chargés à la suite d'une saisie d'utilisation, dans lequel le catalogue présente au moins deux profils d'utilisation (26, 28, 30, 32, 34, 36, 38, 40) qui se différencient par une disponibilité d'au moins une fonction spéciale, et dans lequel la fonction spéciale est un fonctionnement commun d'unités chauffantes définies.
